(19) **Europäisches Patentamt**
**European Patent Office**
**Office européen des brevets**

(11) **EP 4 620 911 A1**

(12) **EUROPEAN PATENT APPLICATION**

(43) Date of publication:
**24.09.2025 Bulletin 2025/39**

(21) Application number: **24165180.1**

(22) Date of filing: **21.03.2024**

(51) International Patent Classification (IPC):
*C01B 33/187* (2006.01)    *C01B 33/193* (2006.01)
*C08K 3/36* (2006.01)    *C01B 17/96* (2006.01)
*C01F 5/40* (2006.01)    *C01G 53/10* (2006.01)
*C01G 49/14* (2006.01)    *C01B 33/18* (2006.01)

(52) Cooperative Patent Classification (CPC):
**C01B 33/18; C01B 33/187; C01B 33/193;**
**C01F 5/40; C01G 49/14; C01G 53/10; C08K 3/36;**
C01P 2002/02; C01P 2004/32; C01P 2004/51;
C01P 2004/61; C01P 2006/12; C01P 2006/80;
C08K 2201/006

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Sibelco Nederland N.V.**
**6223 EP Maastricht (NL)**

(72) Inventor: **VUYYURU, Koteswara Rao**
**6223 EP Maastricht (NL)**

(74) Representative: **Forresters IP LLP**
**Skygarden**
**Erika-Mann-Straße 11**
**80636 München (DE)**

(54) **AMORPHOUS SILICA AND METAL SALTS FROM OLIVINE AND METHODS FOR PRODUCTION THEREOF**

(57)    The present invention relates to amorphous silica comprising particles of amorphous silica with a D50 of from 5 μm to 30 μm. The present invention also relates to a method of producing amorphous silica and metal salts, the method comprising mixing olivine, water and acid in a first vessel and reacting the olivine with the acid to produce amorphous silica.

EP 4 620 911 A1

**Description**

FIELD OF THE INVENTION

The present invention relates to amorphous silica comprising particles of amorphous silica with a D50 of from 5 μm to 30 μm, optionally with a silica purity of 85% by weight or greater. The present invention also relates to a method of producing amorphous silica and metal salts comprising mixing olivine, water and acid in a first vessel and reacting the olivine with the acid to produce amorphous silica and metal salts.

BACKGROUND OF THE INVENTION

Amorphous silica (AS) is a form of silica (otherwise referred to as silicon dioxide or $SiO_2$) which is mostly or completely in the amorphous phase. AS has a high surface area since the material is relatively porous. Such material properties make AS useful for reinforcing, thickening and flattening purposes for different products in the rubber, coatings, cosmetics and food industries.
AS is currently produced on an industrial scale using silica sand as a precursor.
The first step in the industrial method of producing AS is to form a sodium silicate ($Na_2O.nSiO_2$) solution. There are two routes to produce a sodium silicate solution from silica sand: the thermal route and the wet route. In the thermal route, solid sodium silicate is produced by heating silica sand and sodium carbonate together in a furnace at a temperature of approximately 1200°C. The solid sodium silicate is then dissolved in water to form a sodium silicate solution. In the wet route, a solution of sodium silicate is produced by mixing silica sand and sodium hydroxide and heating in an autoclave reactor at from 250°C to 300°C.
The second step in the industrial method of producing AS is the neutralisation of a sodium silicate solution. Neutralisation of the sodium silicate solution is done with an inorganic acid. For example, the sodium silicate solution can be neutralised with sulphuric acid according to the following equation:

$$Na_2O \cdot nSiO_2 + H_2SO_4 \rightarrow nSiO_2 + Na_2SO_4 + H_2O \qquad 1.1$$

One problem with known methods for producing AS on an industrial scale is that, in both the thermal and wet routes for producing the sodium silicate precursor, large amounts of thermal energy are used. The current method for producing AS on an industrial scale therefore has a large carbon footprint.
The present inventors identified a need for more efficient methods for producing AS, optionally with a lower carbon footprint compared to conventional methods.

SUMMARY OF THE INVENTION

The present invention provides a method of producing amorphous silica, the method comprising mixing olivine, water and acid in a first vessel and reacting the olivine with the acid to produce amorphous silica and metal salts. The present invention also provides amorphous silica comprising particles of amorphous silica with a D50 of from 5 μm to 30 μm.
Olivine is a mineral with the generic chemical formula $(Mg,Fe)_2SiO_4$. It is a solid including at least two species: forsterite ($Mg_2SiO_4$) and fayalite ($Fe_2SiO_4$). Generally, in olivine the ratio of forsterite to fayalite (forsterite:fayalite) is around 9:1. The crystal structure of both forsterite and fayalite include divalent metal cation species ($Mg^{2+}$, $Fe^{2+}$) distributed amongst tetrahedral silicate ($SiO_4^{4-}$) species. The crystal structure of olivine does not include Si-O bonds between adjacent silicate species. Rather, the oxygen of each silicate forms ionic bonds with adjacent metal cation species. These ionic bonds are weaker than Si-O bonds. The effect is that olivine is more easily processed to form silica than are many other silicate mineral species, as such minerals often include strong Si-O bonds between adjacent silicate species.
The reaction of forsterite (making up the majority of olivine) with acid can be demonstrated by the following equation:

$$Mg_2SiO_4(s) + 4H^+(aq) \rightarrow 2Mg^{2+}(aq) + H_4SiO_4 \ (aq) \qquad 1.2$$

During the reaction, silicate species are liberated from the crystal surface by breaking the Mg-O bonds with protons. The liberated silicate species are protonated to form silicic acid ($H_4SiO_4$).
The solubility of silicic acid in water at acidic pH levels is very low. Therefore, during the dissolution of olivine silicic acid will immediately start to form amorphous silica by the following overall reaction:

$$H_4SiO_4 \text{ (aq)} \rightarrow SiO_2\text{(s)} + 2H_2O \qquad\qquad 1.3$$

The overall reaction of olivine with acid is exothermic, having a heat of reaction of 225 kJmol$^{-1}$. Therefore, minimal heating is required to maintain the reaction. In this way, the carbon footprint involved in producing AS from olivine is much reduced compared to previous industrial methods for producing AS.

In addition, metal ions formed during the olivine dissolution reaction can be recovered from the reaction solution. For example, valuable metal salts such as magnesium sulphate ($MgSO_4$), iron sulphate ($FeSO_4$) and nickel sulphate ($NiSO_4$) can be recovered.

Representative features of the present invention are set out in the following clauses, which stand alone or may be combined, in any combination, with one or more features disclosed in the text and/or figures of the specification.

The present invention is as set out in the following clauses:

1. Amorphous silica comprising particles of amorphous silica, wherein the particles of amorphous silica have a D50 of from 5 $\mu$m to 30 $\mu$m.

2. The amorphous silica of clause 1, wherein the amorphous silica has: a silica purity of: 85% by weight or greater; or, 90% by weight or greater; or, 94% by weight or greater.

3. The amorphous silica of clause 1 or clause 2, wherein the amorphous silica has a silica purity of: from 94% to 99.9% by weight; or, from 97% to 99.9% by weight; or, from 97% to 99% by weight.

4. The amorphous silica of any one of clauses 1 to 3, wherein the phase purity of the amorphous silica comprises 85% by weight or greater amorphous silica, any remainder of silica being silica with crystalline morphology.

5. The amorphous silica of any one of clauses 1 to 4, wherein the phase purity of the amorphous silica comprises:

   from 85% to 99.9%; or,
   from 90% to 99%; or,
   from 95% to 99%; or,
   from 97% to 99%;
   by weight amorphous silica, any remainder of silica being silica with crystalline morphology.

6. The amorphous silica of any one of clauses 1 to 5, wherein the particles of amorphous silica have a D10 of from 0.5 $\mu$m to 15 $\mu$m.

7. The amorphous silica of any one of clauses 1 to 6, wherein the particles of amorphous silica have a D90 of from 10 $\mu$m to 70 $\mu$m.

8. The amorphous silica of any one of clauses 1 to 7, wherein the amorphous silica comprises: less than 2,000 ppm Mg as measured by ICP-OES; or less than 1,000 ppm Mg as measured by ICP-OES.

9. The amorphous silica of any one of clauses 1 to 8, wherein the amorphous silica comprises: less than 300 ppm Ni as measured by ICP-OES; or, less than 250 ppm Ni as measured by ICP-OES.

10. The amorphous silica of any one of clauses 1 to 9, wherein the amorphous silica has a BET of: from 50m$^2$/g to 500m$^2$/g; or, from 100m$^2$/g to 400m$^2$/g; or, from 150m$^2$/g to 350m$^2$/g; or, from 200m$^2$/g to 300m$^2$/g.

11. The amorphous silica of any one of clauses 1 to 10, wherein the particles of amorphous silica are generally spherical.

12. The amorphous silica of any one of clauses 1 to 11, wherein the amorphous silica is precipitated amorphous silica.

13. A slurry comprising amorphous silica according to any one of clauses 1 to 12; optionally, wherein the slurry further comprises water and acid; optionally, wherein the acid is sulfuric acid.

14. A cake or a powder, the cake or the powder comprising amorphous silica according to any one of clauses 1 to 12.

15. The slurry according to clause 13, or the cake or the powder according to clause 14, for use in forming precipitated amorphous silica.

16. A method of producing amorphous silica, the method comprising:

mixing olivine, water and acid in a first vessel; and,
reacting the olivine with the acid to produce amorphous silica.

17. The method of clause 16, wherein the method further produces metal salts; optionally, wherein the metal salts comprise (or consist of) any one or more of: $MgSO_4$, $FeSO_4$ and/or $NiSO_4$.

18. The method of producing amorphous silica of clause 16 or clause 17, wherein the acid is selected from an organic acid and/or an inorganic acid.

19. The method of producing amorphous silica of any one of clauses 16 to 18, wherein the acid is selected from one or more of: sulphuric acid ($H_2SO_4$), ammonium acid sulfite (($NH_4)_2SO_3$) and hydrochloric acid (HCl).

20. The method of producing amorphous silica of any one of clauses 16 to 19, wherein the acid is sulphuric acid ($H_2SO_4$).

21. The method of producing amorphous silica of any one of clauses 16 to 20, wherein the olivine comprises, or consists of, olivine particles.

22. The method of producing amorphous silica of clause 21, wherein the particle size of the olivine particles is: from 5 $\mu$m to less than 1500 $\mu$m; or, from 5 $\mu$m to less than 500 $\mu$m; or, from 5 $\mu$m to less than 300 $\mu$m; or, from 5 $\mu$m to less than 200 $\mu$m; or, from 5 $\mu$m to less than 100 $\mu$m.

23. The method of producing amorphous silica of any one of clauses 16 to 22, comprising reacting the olivine with the acid for: from 0.5 hours to 10 hours; or, from 1 hour to 8 hours.

24. The method of producing amorphous silica of clause 23, comprising reacting the olivine with the acid for from 2 hours to 6 hours.

25. The method of producing amorphous silica of clause 23 or clause 24, comprising reacting the olivine with the acid for from 3 hours to 4 hours; optionally, wherein the olivine is reacted with the acid in a batch reactor or a continuous reactor.

26. The method of producing amorphous silica of any one of clauses 16 to 25, wherein the reaction between the olivine and the sulfuric acid is maintained at a temperature of from 30°C to 180°C.

27. The method of producing amorphous silica of clause 26, wherein the reaction between the olivine and the sulfuric acid is maintained at a temperature of from 40°C to 150°C.

28. The method of producing amorphous silica of clause 26, wherein the reaction between the olivine and the sulfuric acid is maintained at a temperature of from 50 °C to 120 °C.

29. The method of producing amorphous silica of any one of clauses 16 to 28, wherein the acid concentration is: from 10 volume % to 35 volume %; or from 15 volume % to 30 volume %; or from 20 volume % to 25 volume %.

30. The method of producing amorphous silica of any one of clauses 16 to 29, wherein the reaction between the olivine and the sulfuric acid ($H_2SO_4$) is maintained at a pH of from -2 to 5.

31. The method of producing amorphous silica from olivine of clause 30, wherein the reaction between the olivine and the acid is maintained at a pH of from -1 to 4.

32. The method of producing amorphous silica from olivine of clause 30 or clause 31, wherein the reaction between the olivine and the acid is maintained at a pH of from 0 to 3.

33. The method of producing amorphous silica of any one of clauses 16 to 32, wherein the reaction between the olivine and the acid (optionally, $H_2SO_4$) starts at atmospheric pressure and proceeds at autogenous pressure.

34. The method of producing amorphous silica of any one of clauses 16 to 33, further comprising subsequently cooling the reaction mixture to: between 20°C and 80°C; or, between 20°C and 50°C.

35. The method of producing amorphous silica of any one of clauses 16 to 34, further comprising the step of allowing the reaction mixture to settle, forming a layer of sediment and a layer of slurry; further optionally, wherein the reaction mixture is transferred to a second vessel before being allowed to settle.

36. The method of producing amorphous silica of clause 35, wherein the reaction mixture is allowed to settle for between 10 minutes and 1 hour.

37. The method of producing amorphous silica of clause 35 or clause 36, further comprising filtering the layer of slurry to form a filter cake.

38. The method of producing amorphous silica of clause 37, wherein the filtering occurs on a filter press; optionally, a plate-and-frame filter press, a rotary drum filter a centrifugal separator or a membrane-based filter.

39. The method of producing amorphous silica of clause 37 or clause 38, further comprising feeding the filtrate back to the first vessel.

40. The method of producing amorphous silica of any one of clauses 37 to 39, further comprising washing the filter cake with water, forming a clean filter cake and used washing water.

41. The method of producing amorphous silica of clause 40, wherein the water used to wash the filter cake comprises used washing water.

42. The method of producing amorphous silica of clause 40 or 41, further comprising drying the clean filter cake; optionally, spray drying the clean filter cake.

43. The method of any one of clauses 16 to 42, wherein the produced amorphous silica is according to any one of clauses 1 to 15.

44. Amorphous silica obtained, or obtainable, by the method of any one of clauses 16 to 43.

45. A metal sulphate obtained, or obtainable, by the method of any one of clauses 16 to 43.

46. The metal sulphate of clause 45, wherein the metal sulphate comprises one or more of: magnesium sulphate ($MgSO_4$), iron(II) sulphate ($FeSO_4$), and/or nickel sulphate ($NiSO_4$).

47. Amorphous silica according to any one of clauses 1 to 12, a slurry according to clause 13, a cake or a powder according to clause 14, for use in reinforcing, thickening and/or flattening products in the rubber, coatings, cosmetics and/or food industries.

DETAILED DESCRIPTION

Embodiments of the invention are described below with reference to the accompanying drawings. The accompanying drawings illustrate various embodiments of systems, methods, and embodiments of various other aspects of the disclosure. Any person with ordinary skills in the art will appreciate that the illustrated element boundaries (e.g. boxes, groups of boxes, or other shapes) in the figures represent one example of the boundaries. It may be that in some examples one element may be designed as multiple elements or that multiple elements may be designed as one element. In some examples, an element shown as an internal component of one element may be implemented as an external component in another and vice versa. Furthermore, elements may not be drawn to scale. Non-limiting and non-exhaustive descriptions are described with reference to the following drawings. The components in the figures are not necessarily to scale, emphasis instead being placed upon illustrating principles.

Figure 1A is a bar chart showing the olivine conversion at different acid concentrations ($c_1$).

Figure 1B is a bar chart showing the AS yield at different acid concentrations ($c_1$).

Figure 1C is a bar chart showing the AS purity for AS produced at different acid concentrations ($c_1$).

Figure 1D is a bar chart showing the magnesium leaching efficiency from reaction filtrates left over from olivine dissolution reactions with different acid concentrations (C1).

Figure 2A is a bar chart showing the olivine conversion for reactions with various reflux times ($t_1$).

Figure 2B is a bar chart showing AS yield for reactions with various reflux times ($t_1$).

Figure 2C is a bar chart showing the AS purity measured for products of reactions with various reflux times ($t_1$)

Figure 2D is a bar chart showing magnesium leaching efficiency from reaction filtrates over from olivine dissolution reactions with various reflux times ($t_1$).

Figure 3A is a bar chart showing the olivine conversion for reactions using olivine with different particle size ranges ($p_1$).

Figure 3B is a bar chart showing AS yield for reactions using olivine with different particle size ranges ($p_1$).

Figure 3C is a bar chart showing the AS purity measured for products of reactions using olivine with different particle size ranges ($p_1$).

Figure 3D is a bar chart showing magnesium leaching efficiency from reaction filtrates left over from olivine dissolution reactions using olivine with different particle size ranges ($p_1$).

Figure 4A is a bar chart showing the olivine conversion for olivine reactions with various solid-to-liquid ratios.

Figure 4B is a bar chart showing AS yield for olivine reactions with various solid-to-liquid ratios.

Figure 4C is a bar chart showing the AS purity measured for products of olivine reactions with various solid-to-liquid ratios.

Figure 4D is a bar chart showing magnesium leaching efficiency from reaction filtrates left over from olivine dissolution reactions with various solid-to-liquid ratios.

Figure 5 is a schematic diagram depicting large-scale olivine dissolution system 100.

Figure 6 is a scanning electron microscope (SEM) image of AS formed by the method of the present invention.

Figure 7 a particle size distribution (PSD) of AS formed by the method of the present invention; the AS is in powder state after drying the AS cake in the oven at 125°C. One plot shows the relative distribution of particle sizes; the other plot shows the cumulative distribution (up to 100).

Figure 8 is Thermogravimetric Analysis-Mass Spectrometry (TGA-MS) of AS powder (the same AS powder as analysed in Figure 7) after drying in the oven at 125°C.

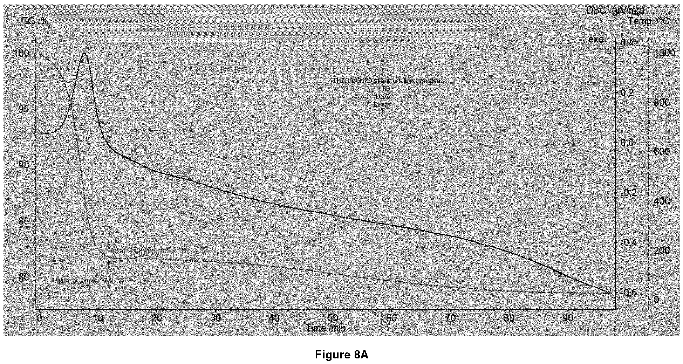

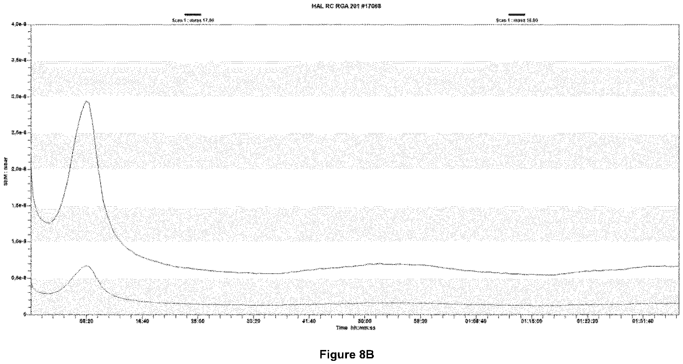

Measurement was conducted with a heating rate of 10K/min between 25 and 1000°C in air. Figure 8A shows TG, DSC, and Temperature profiles of the AS sample. Figure 8B shows corresponding MS analysis of the same AS sample to find out the mass of releasing species.

Embodiments of the present disclosure will be described more fully hereinafter with reference to the accompanying drawings in which like numerals represent like elements throughout the several figures, and in which example embodiments are shown. Embodiments of the claims may, however, be embodied in many different forms and should not be construed as limited to the embodiments set forth herein.

The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present disclosure, the preferred systems and methods are now described.

Some of the terms used to describe the present invention are set out below:

"Amorphous silica" refers to a form of silica ($SiO_2$) which is mostly or completely in the amorphous phase.

"Amorphous precipitated silica" refers to an amorphous form of silicon dioxide formed by precipitation, for example from a sodium silicate solution.

"Autogenous pressure", when relating to a chemical reaction, refers to the pressure arising as a result of the reaction itself; no pressure is applied by external means.

"D10" refers to the particle maximum dimension at 10% in a cumulative distribution of maximum dimensions of particles in a mixture of particles.

"D50" refers to the particle maximum dimension at 50% in a cumulative distribution of maximum dimensions of particles in a mixture of particles. D50 is sometimes referred to as the median maximum dimension in a particle size distribution.

"D90" refers to the particle maximum dimension at 90% in a cumulative distribution of maximum dimensions of particles in a mixture of particles.

"Maximum dimension" refers to the longest cross-sectional dimension of any particular particle. Particles according to the present invention can have a variety of shapes, including but not limited to: generally (although not perfectly) spherical, rod-like, cylindrical, cone-like, cube-like, cuboid, tetrahedral or irregular three-dimensional.

"Olivine" refers to a mineral with the generic chemical formula $(Mg,Fe)_2SiO_4$. It is a solid including at least two species: forsterite ($Mg_2SiO_4$) and fayalite ($Fe_2SiO_4$). It may also include certain "unavoidable impurities" arising from the mining or extraction method. For instance, olivine may also include $Fe_2O_3$, $Al_2O_3$, $Cr_2O_3$ and/or NiO.

"Particle size" refers to the longest internal dimension of a particle when measured from one internal surface of the particle to an internal surface opposite that surface.

"Unavoidable impurities" refers to components present in a composition which do not affect the properties of the composition. Unavoidable impurities are present in a composition at: less than 10 weight %; or, less than 8 weight %; or, less than 6 weight %; or, less than 4 weight %; or, less than 2 weight %; or less than 1 weight %; or less than 0.5 weight %.

"Weight %" refers to the percentage weight in grams of a component of a composition in every 100 grams of a composition. For example, if a composition contains 10 weight % of component A, then there is 10g of component A for every 100g of the composition. By default values are in weight %, unless volume % is specified.

"Volume %" refers to the percentage in litres of a component of a composition in every 100 litres of a composition. For example, if a method of producing amorphous silica uses acid at 10 volume %, then there is 10 litres of acid for every 100 litres of total fluids in the reaction.

EXAMPLES

The following are non-limiting examples that discuss, with reference to tables and figures, the advantages of the present invention. The examples set forth herein are merely examples among other possible examples.

Example 1: Lab-scale olivine dissolution

In this non-limiting example, the effect of process parameters on the conversion of olivine to amorphous silica (AS) and various metal salts (in particular, magnesium salts) was assessed.

*Materials*

Sulphuric acid refers to a 96 % by weight solution of Sulfuric Acid in Water obtained from Fischer Scientific.

Olivine was obtained from Sibelco Nordic AS, Norway (chemical compositions shown in Table 1).

*Table 1: Chemical compositions of example olivines.*

| | | | Olivine AFS 120 DS ("AFS 120") | Olivine AFS 45 DS ("AFS 45") | Olivine AFS 20 DS ("AFS 20") | Olivine 0-3 mm |
|---|---|---|---|---|---|---|
| % by weight | MgO | Magnesium Oxide | 49.3 | 50 | 49.9 | 49.8 |
| | $SiO_2$* | Silicon Oxide* | 41.6 | 41.5 | 41.5 | 41 |
| | $Fe_2O_3$ | Iron Oxide | 7.6 | 7.4 | 7.4 | 7 |
| | $Al_2O_3$ | Aluminium Oxide | 0.3 | 0.42 | 0.34 | 0.5 |
| | $Cr_2O_3$ | Chromium Oxide | 0.77 | 0.28 | 0.32 | 0.3 |
| | NiO | Nickel Oxide | 0.32 | 0.32 | 0.32 | 0.3 |
| | MnO | Mangan Oxide | 0.09 | 0.09 | 0.09 | 0.1 |
| | L.O.I.** | Loss on Ignition** | 0.6 | 0.6 | 0.7 | 0.8 |

* Present as silicate, contains < 0.1% by weight free crystalline silica.
** Weight reduction after 30 minutes at 900°C/air.

*Table 2: Particle size distribution and properties of example olivines.*

| | Sieve size | Olivine AFS 120 DS ("AFS 120") | Olivine AFS 45 DS ("AFS 45") | Olivine AFS 20 DS ("AFS 20") |
|---|---|---|---|---|
| | mm | % | % | % |
| % Retained on individual sieves | 1.4 | - | - | 17.2 |
| | 1 | - | 0.1 | 40 |
| | 0.71 | - | 4.5 | 25 |
| | 0.5 | - | 13 | 8 |
| | 0.36 | - | 22 | 5 |
| | 0.25 | 0 | 35.5 | 2 |
| | 0.18 | 0.3 | 18.9 | 1 |
| | 0.125 | 37.5 | 5 | 1 |
| | 0.09 | 38 | 0.7 | 0.5 |
| | 0.063 | 16 | 0.2 | 0.2 |
| | <0.063 | 8.2 | 0.1 | 0.1 |

Sodium hydroxide refers to Sodium Hydroxide (White Pellets), Fisher BioReagents™ from Fischer Scientific.
The source of the materials remained the same throughout the examples.

*Method 1: producing amorphous silica and metal salts*

Amorphous silica ("AS") was produced according to method 1, as follows:

(1) A solution (0.5L) of sulfuric acid in water was made up at a concentration ($c_1$) in a flat bottom flask. Olivine (having particle size range, $p_1$) was added and the solution heated to a set temperature ($T_1$) and refluxed for a time period ($t_1$), forming amorphous silica (AS). The reaction mixture was allowed to cool to room temperature, permitted to settle and then filtered under vacuum using a Büchner funnel. Prior to filtration under vacuum using a Büchner funnel, unreacted olivine was decanted.
(2) The filter cake was dispersed in water (0.4L) and stirred for 1 hour, then filtered under vacuum using a Büchner funnel.
(3) Once dry, the filter cake was mixed with water (1L). The mixture was ultrasonicated for 10 minutes using an Hielscher UP400St ultrasonic homogeniser. Any inert/unconverted minerals are removed.
(4) The liquid mixture was centrifuged using a Himac CR22N centrifuge at 8500 rpm for 10 minutes at room temperature. The solid pellet formed was mixed with water, then filtered under vacuum using a Büchner funnel.
(5) The filter cake was mixed with water.
(6) Step (4) and (5) were repeated a further four times.
(7) The resulting powder was dried using a Binder FD-56 drying oven for 10h at 125°C.

A sample of the dried amorphous silica formed step (7) was then ground to a fine powder by pestle and mortar for further characterisation. A sample of the filtrate formed after the filtration step of step (1) was collected for further characterisation.

*Characterisation*

Samples for X-ray fluorescence spectroscopy (XRF) required further processing before analysis. The loss on ignition was carried at 1100°C performed on the AS sample. After loss on ignition, the sample was milled by a ball mill and then mixed with lithium tetraborate to convert into a glass disc by fusion (XRF Scientific XRFuse 6). This glass disc was used to measure with an X-ray fluorescence spectrometer. X-ray fluorescence (XRF) spectra of the glass beads were recorded on Panalytical Axios Max XRF1 (PW4400/40) provided by PANALYTICAL BV.
The leach solution containing dissolved metal salts were analysed by Inductively coupled plasma atomic emission spectroscopy (ICP-OES) model Avio 500 provided by Perkin Elmer.
To measure impurity concentration in AS sample, first AS samples were milled by a ball mill. A digestion is performed (Microwave Speedwave XPERT, Berghoff with a vacuum pump system, SC9206) on the olivine sample to dissolve impurities of AS samples and transfer them into the liquid phase. The liquid (sample) is diluted and measured by ICP-OES (ICP-OES Avio 500 Perkin-Elmer) with an autosampler.
Images of AS samples were recorded on a JEOL JSM-6010 Plus/LV scanning electron microscope (SEM) provided by JEOL. The powder sample of AS is placed on carbon tape and sample holder to perform SEM analysis.
Leach and wash solution pH were noted using FiveEasy Plus pH meter FP20-Std-Kit from Mettler Toledo.
Particle size distribution (PSD) was analysed by MASTERSIZER 3000 from Malvern Panalytical Ltd. The milled AS powder of 1g sample added to 50ml of water is sonicated using tip sonifier type UP50H from Hielscher for 1 min with amplitude of 70%. The dispersed AS sample was added to MASTERSIZER 3000. The optical concentration should be 10-15% and then sonicated for 3 min. The Particle size distribution data of AS was recorded by using software.
Surface area by Brunauer-Emmett-Teller (BET) was analysed by Nova Touch 4LX provided by Quantachrome Instruments. Prior to BET analysis, AS samples were dried and degassed using N2 gas. The adsorption study was carried out by using N2 gas.
Thermogravimetric analysis (TG) and differential scanning calorimetry (DSC) were performed on an STA 449F3 Jupiter from Netzsch. The outlet of the TGA is coupled to a mass spectrometer (MS) analysed on an HPR-20 QIC - EGA from Hidden.

*Parameters*

A number of parameters are used to explain the results, which were calculated as follows:

$$Olivine\ Conversion\ (\%) = \frac{Initial\ Olivine\ (g) - Unreacted\ Mineral\ (g)}{Initial\ Olivine\ (g)} * 100$$

Initial Olivine (g) = the mass (g) of olivine added to step (1) of method 1.
Unreacted Mineral (g) = the mass (g) of inert solids obtained by step (3) of method 1.

$$AS\ Yield\ (\%) = \frac{Amount\ of\ dried\ AS\ (g)}{Initial\ Olivine\ (g) * SiO2\ in\ Olivine\ (41.5\%)} * 100$$

Amount of dried AS (g) = the mass (g) of olivine obtained by step (7) of method 1.
Initial Olivine (g) = the mass (g) of olivine added to step (1) of method 1.
$SiO_2$ in Olivine = 0.415 = proportion of silica in Sibelco olivine (see Table 1).

$$Mg\ leaching\ efficiency\ (\%)$$

$$= \frac{Mg\ ion\ concentration\ (g)\ from\ ICP - OES\ data}{Initial\ Olivine\ amount\ (g) * MgO\ in\ Olivine\ (49\%) * Mg\ in\ MgO\ (60\%)} * 100\%$$

Mg ion concentration (g) from ICP-OES data, obtained by a simple conversion of Mg ion concentration given in parts per million (ppm).

MgO in Olivine = 0.49 = proportion of MgO in Sibelco olivine (see Table 1)

Mg in MgO = molecular weight of Mg divided by the molecular weight of MgO = 0.60.

The "AS Purity (%)" is a measure of purity calculated using XRF spectroscopy.

*Overview of experiments*

A number of experiments were performed in which olivine was processed according to method 1.

The acid concentration ($c_1$), reaction time ($t_1$), olivine particle size ($p_1$) and the ratio of solid-to-liquid (solid(g):liquid(ml)) in the reaction mixture was varied to determine the effect on the formation of the AS.

Table 3 and Table 4 shows the amount of olivine, olivine particle size range ($p_1$), ratio of solids to liquids, acid concentration ($c_1$), and reaction reflux time ($t_1$) for olivine (1)-(24).

Reflux was undertaken at each occurrence at a temperature of from 100°C to 110°C.

*Table 3: The amount of olivine, olivine particle size range ($p_1$), ratio of solids-to-liquid, acid concentration ($c_1$), and reaction reflux time ($t_1$) for experiments in which olivine was processed according to method 1.*

| Experiment no. | Reference | Amount of olivine (g) | Particle size range, $p_1$ ($\mu m$) | Solid(g):liquid(ml) | Acid concentration, $c_1$ (vol./vol.) % | Reflux time, $t_1$ (h) |
|---|---|---|---|---|---|---|
| (1) | R-S-22%-3T-01 | 40 | AFS 45 | 1:12 | 22 | 3 |
| (2) | R-S-16%-3T-05 | 50 | AFS 45 | 1:10 | 16 | 3 |
| (3) | R-S-22%-4T-02 | 40 | AFS 45 | 1:12 | 22 | 4 |
| (4) | R-S-16%-4T-01 | 40 | AFS 45 | 1:12 | 16 | 4 |
| (5) | R-S-22%-3T-02 | 50 | AFS 45 | 1:10 | 22 | 3 |
| (6) | R-S-16%-4T-02 | 50 | AFS 45 | 1:10 | 16 | 4 |
| (7) | R-S-16%-4T-03 | 50 | AFS 45 | 1:10 | 16 | 4 |
| (8) | R-S-16%-4T-04 | 50 | AFS 45 | 1:10 | 16 | 4 |
| (9) | R-S-22%-2T-01 | 50 | AFS 45 | 1:10 | 22 | 2 |
| (10) | R-S-22%-4T-01 | 50 | AFS 45 | 1:10 | 22 | 4 |
| (11) | R-S-11%-3T-01 | 50 | AFS 45 | 1:10 | 11 | 3 |

**Table 4**: *The amount of olivine, olivine particle size range ($p_1$), ratio of solids-to-liquid, acid concentration ($c_1$), and reaction reflux time ($t_1$) for experiments in which olivine was processed according to method 1.*

| Experiment no. | Reference | Amount of olivine (g) | Particle size range, $p_1$ ($\mu m$) | Solid(g):liquid(ml) | Acid concentration, $c_1$ (vol./vol.) % | Reflux time, $t_1$ (h) |
|---|---|---|---|---|---|---|
| 12 | R-S-22%-3T-03 | 50 | AFS 120 | 1:10 | 22 | 3 |
| 13 | R-S-11%-4T-02 | 50 | AFS 120 | 1:10 | 11 | 4 |
| 14 | R-S-16%-4T-05 | 50 | AFS 120 | 1:10 | 16 | 4 |
| 15 | R-S-22%-2T-02 | 50 | AFS 120 | 1:10 | 22 | 2 |
| 16 | R-S-16%-3T-01 | 50 | AFS 120 | 1:10 | 16 | 3 |
| 17 | R-S-22%-3T-04 | 50 | AFS 20 | 1:10 | 22 | 3 |
| 18 | R-S-22%-3T-05 | 42 | AFS 45 | 1:12 | 22 | 3 |
| 19 | R-S-16%-3T-02 | 42 | AFS 45 | 1:12 | 16 | 3 |
| 20 | R-S-22%-3T-06 | 62 | AFS 45 | 1:08 | 22 | 3 |
| 21 | R-S-16%-3T-03 | 63 | AFS 45 | 1:08 | 16 | 3 |
| 22 | R-S-22%-3T-07 | 83 | AFS 45 | 1:06 | 22 | 3 |
| 23 | R-S-16%-3T-04 | 84 | AFS 45 | 1:06 | 16 | 3 |

*Preliminary polymorphism analysis*

XRD was used to measure the polymorphism of each silica product formed by experiments 1-28 (above). The results confirmed that the vast majority of the silica formed from each experiment was amorphous silica (on average, amorphous silica was 98% of samples of silica formed in experiments).

**Table 5**: *Amorphous phase percentage in $SiO_2$ of experiments 1-23 from XRD.*

| Experiment no. | Reference | XRD, Amorphous SiO2 (%) |
|---|---|---|
| 1 | R-S-22%-3T-01 | 96.9 |
| 2 | R-S-16%-3T-05 | 97 |
| 3 | R-S-22%-4T-02 | 97.7 |
| 4 | R-S-16%-4T-01 | 97 |
| 5 | R-S-22%-3T-02 | 98.5 |
| 6 | R-S-16%-4T-02 | 98.1 |
| 7 | R-S-16%-4T-03 | 98 |
| 8 | R-S-16%-4T-04 | 98 |
| 9 | R-S-22%-2T-01 | 98 |
| 10 | R-S-22%-4T-01 | 98 |
| 11 | R-S-11%-3T-01 | 98 |
| 12 | R-S-22%-3T-03 | 98 |
| 13 | R-S-11%-4T-02 | 99 |
| 14 | R-S-16%-4T-05 | 99 |
| 15 | R-S-22%-2T-02 | 99 |
| 16 | R-S-16%-3T-01 | 99 |
| 17 | R-S-22%-3T-04 | 99 |

(continued)

| Experiment no. | Reference | XRD, Amorphous SiO2 (%) |
|---|---|---|
| 18 | R-S-22%-3T-05 | 99 |
| 19 | R-S-16%-3T-02 | 99 |
| 20 | R-S-22%-3T-06 | 99 |
| 21 | R-S-16%-3T-03 | 99 |
| 22 | R-S-22%-3T-07 | 99 |
| 23 | R-S-16%-3T-04 | 96 |

*Influence of acid concentration on olivine digestion*

Olivine AFS 45 samples were processed according to method 1. The reaction parameters kept constant were as follows:

Reflux time, $t_1$ (hours): 3

Particle size range, $p_1$ ($\mu$m): AFS 45

Temperature, $T_1$ (°C): 100

Solid(g):liquid(ml): 1:10

The acid concentration ($c_1$) was varied from 8 (v/v%) to 22 (v/v%). The silica products that were obtained were washed until neutral pH, dried in the oven, and then ground. XRF analysis was done for all grounded amorphous silica powders. A sample of the filtrate from step (1) of method 1 was sent for ICP-OES analysis, to determine the concentration of metal ions (in particular, Mg ions) in solution.

*Table 6: XRF and ICP-OES data from the influence of acid concentration studies.*

| | Description Lims no. | | R-S-22%-3T-02 (5) | R-S-16%-3T-05 (2) | R-S-11%-3T-01 (11) |
|---|---|---|---|---|---|
| **Chemistry XRF** | $Fe_2O_3$ | % | 0.09 | 0.05 | 0.11 |
| | $Al_2O_3$ | % | 0.02 | < 0.01 | 0.10 |
| | $TiO_2$ | % | <0.01 | < 0.01 | < 0.01 |
| | $K_2O$ | % | 0.01 | < 0.01 | < 0.01 |
| | CaO | % | 0.02 | 0.01 | 0.02 |
| | MgO | % | 0.52 | 0.22 | 0.73 |
| | $Na_2O$ | % | 0.03 | 0.01 | 0.01 |
| | $SiO_2$ | % | 91.64 | 92.8 | 90.58 |
| | NiO | % | | 0.01 | |
| | $SO_3$* | % | | 0.03 | |
| **LOI**\*\* | 950°C | % | 6.22 | 6.08 | 6.31 |
| | | | | | |

(continued)

| | Description | Lims no. | R-S-22%-3T-02 (5) | R-S-16%-3T-05 (2) | R-S-11%-3T-01 (11) |
|---|---|---|---|---|---|
| **ICP-OES** | Al | ppm | 73.8 | 98.2 | 56.0 |
| | Cr | ppm | 5.8 | 5.3 | 9.7 |
| | Fe | ppm | 2625.5 | 3890.6 | 4672.5 |
| | Mg | ppm | 13712.2 | 21745.5 | 26599.3 |
| | Na | ppm | 8.0 | 6.4 | 13.3 |
| | Ni | ppm | 209.2 | 317.5 | 257.5 |
| | Si | ppm | 29.9 | 29.3 | 16.5 |
| * semi-quantitative: the SOs value is not fully quantitative | | | | | |

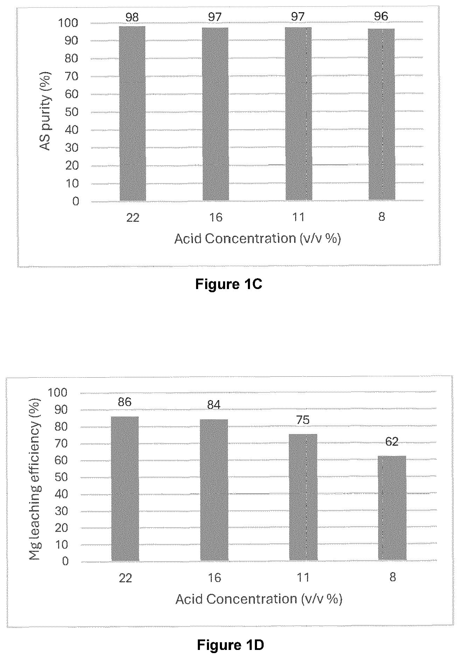

XRF is performed directly on AS obtained after grounding and drying in the oven at 125°C and still holds moisture. **LOI in XRF data represents the loss of moisture (4-7%) at 950°C, which is confirmed by TGA-MS. Moisture (4-7%) from LOI of XRF data is added to SiO2 to estimate the actual amount of $SiO_2$ in the sample and reported an average of reputed experiments in Figure 1C as AS purity%.

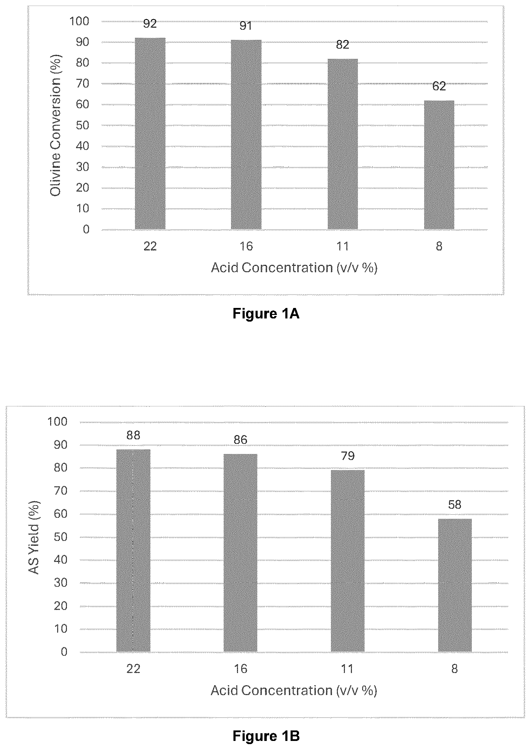

Figure 1A shows the olivine conversion at different acid concentrations ($c_1$). Figure 1B shows the AS yield at different acid concentrations. The figures demonstrate that increasing the acid concentration ($c_1$) from 8 vol. % to 16 vol. % results in a notable increase in olivine conversion (29% increase) and AS yield (29% increase). A smaller increase in olivine conversion (1%) and AS yield (2%) is seen by increasing the acid concentration ($c_1$) from 16 vol. % to 22 vol. %.

Figure 1C shows the AS purity for AS produced at different acid concentrations ($c_1$), as calculated using XRF data. The figure demonstrates that the purity of the silica obtained from processing the olivine at different acid concentrations was very high (from 96% to 98%) at all acid concentrations.

Figure 1D shows the magnesium leaching efficiency from reaction filtrates from olivine dissolution reactions with different acid concentrations ($c_1$), as calculated using ICP-OES data. The concentrations of metal ions ICP-OES data in Table 6 shown in ppm have different dilution factors. The final concentrations after considering dilution used to calculate the efficiency in Figure 1D. A similar pattern to Figures 1A and 1B is observed, with the biggest increase in leaching efficiency demonstrated by increasing the acid concentration ($c_1$) from 8 vol. % to 16 vol. % and a smaller increase when the acid concentration ($c_1$) is increased from 16 vol. % to 22 vol. %.

*Influence of digestion/reflux time on olivine digestion*

Olivine samples were processed according to method 1. The reaction parameters kept constant were as follows:

Acid concentration, $c_1$ (vol. %): 22
Particle size range, $p_1$ ($\mu$m): AFS 45 (180 - 500$\mu$m)
Temperature, $T_1$ (°C): 100
Solid:liquid: 1:10

The reflux time was varied from 1 hour to 4 hours. The four silica products that were obtained were weighed, and samples of each sent for XRF analysis. A sample of each filtrate from step (1) of method 1 was sent for ICP-MS analysis, to determine the concentration of metal ions (in particular, Mg ions) in solution.

*Table 7: XRF and ICP-OES data from digestion/reflux time on olivine digestion.*

| | Description Lims no. | | R-S-22%-2T-01 (9) | R-S-22%-3T-02 (5) | R-S-22%-4T-01 (10) |
|---|---|---|---|---|---|
| **Chemistry XRF** | $Fe_2O_3$ | % | | 0.07 | 0.032 |
| | $Al_2O_3$ | % | *<0.01* | < 0.01 | <0.001 |
| | $TiO_2$ | % | *<0.01* | < 0.01 | <0.001 |
| | $K_2O$ | % | *<0.01* | < 0.01 | 0.004 |
| | CaO | % | *0.01* | 0.02 | 0.012 |
| | MgO | % | *0.36* | 0.45 | 0.243 |
| | $Na_2O$ | % | *0.02* | 0.01 | 0.012 |
| | $SiO_2$ | % | *89.21* | 92.39 | 90.021 |
| | NiO | % | *0.01* | 0.01 | |
| | $SO_3$* | % | *0.02* | 0.04 | |
| **LOI**** | 950°C | % | 6.22 | 5.80 | 5.53 |
| | | | | | |
| **ICP-OES** | Al | ppm | 36.3 | 46.9 | 26 |
| | Cr | ppm | 5.3 | 8.1 | 4 |
| | Fe | ppm | 3623.6 | 4037.7 | 2153 |
| | Mg | ppm | 20996.9 | 24961.3 | 12513 |
| | Na | ppm | 13.8 | 9.3 | 15 |
| | Ni | ppm | 188.4 | 233.9 | 124 |
| | Si | ppm | 18.8 | 18.9 | 15 |
| * semi-quantitative: the SOs value is not fully quantitative | | | | | |

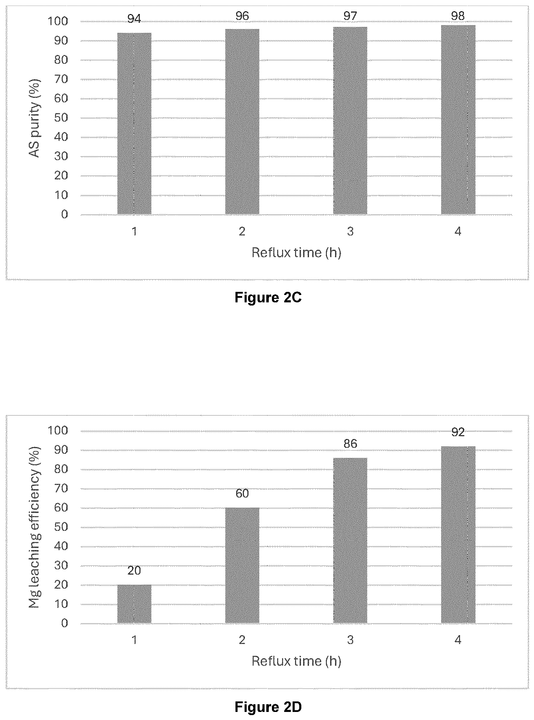

XRF is performed directly on AS obtained after grounding and drying in the oven at 125°C and still holds moisture. **LOI in XRF data represents the loss of moisture (4-7%) at 950°C, which is confirmed by TGA-MS. Moisture (4-7%) from LOI of XRF data is added to $SiO_2$ to estimate the actual amount of $SiO_2$ in the sample and reported an average of reputed experiments in Figure 2C as AS purity%.

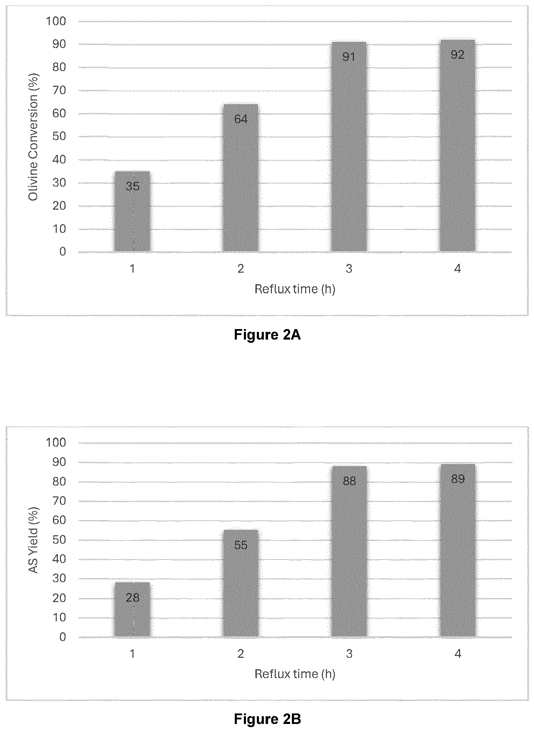

Figure 2A shows the olivine conversion for reactions with various reflux times, $t_1$.

Figure 2B shows the AS yield for reactions with various reflux times, $t_1$. The figures demonstrate that increasing the reflux time from 2 hour to 4 hours results in a notable increase in olivine conversion (60% increase) and AS yield (60% increase).

A smaller increase in olivine conversion (1%) and AS yield (1%) is seen by increasing the reflux time from 3 hours to 4 hours.

Figure 2C shows the AS purity measured for products of reactions with various reflux times, $t_1$, as calculated using XRF data. The figure demonstrates that the purity of the silica obtained from processing the olivine at different reflux time was very high (from 94% to 98%) at given acid concentrations.

Figure 2D shows the magnesium leaching efficiency from reaction filtrates from olivine dissolution reactions with various reaction times, $t_1$, as calculated using ICP-MS data. The concentrations of metal ions ICP-OES data in Table 7 shown in ppm have different dilution factors. The final concentrations after considering dilution are in Figure 2D. A similar pattern to Figures 2A and 2B is observed, with the biggest increase in leaching efficiency demonstrated by increasing the reflux time from 1 hour (20%) to 3 hours (86%) and a smaller increase when the reflux time is increased from 3 hours to 4 hours (92%). Without being bound by theory, the reasons for the increase in magnesium leaching efficiency are thought to be the same as for the increase in conversion and AS yield.

*Influence of particle size on olivine digestion*

Olivine samples were processed according to method 1. The reaction parameters kept constant were as follows:

Reflux time, $t_1$ (hours): 3

Acid concentration, $c_1$ (vol. %): 22
Temperature, $T_1$ (°C): 100
Solid:liquid: 1:10

The particle size range was selected from one of AFS 120 (63 - 125 $\mu$m), AFS 45 (180 - 500 $\mu$m). The silica products that were obtained were weighed, and samples of each sent for XRF analysis. A sample of each filtrate from step (1) of method 1 was sent for ICP-OES analysis, to determine the concentration of metal ions (in particular, Mg ions) in solution.

*Table 8: XRF and ICP-OES data from the Influence of particle size on olivine digestion studies.*

|  | Description | Lims no. | R-S-22%-3T-03 (12) | R-S-22%-3T-02 (5) |
|---|---|---|---|---|
| **Chemistry XRF** | $Fe_2O_3$ | % | 0.18 | 0.09 |
|  | $Al_2O_3$ | % | 1.20 | 0.02 |
|  | $TiO_2$ | % | 0.01 | <0.01 |
|  | $K_2O$ | % | 0.41 | 0.01 |
|  | CaO | % | 0.14 | 0.02 |
|  | MgO | % | 1.15 | 0.52 |
|  | $Na_2O$ | % | 0.35 | 0.03 |
|  | $SiO_2$ | % | 85.04 | 91.64 |
|  | NiO | % |  |  |
|  | $SO_3$* | % |  |  |
| **LOI** | 950°C | % | 6.36 | 6.22 |
|  |  |  |  |  |
| **ICP-OES** | Al | ppm | 39.4 | 73.8 |
|  | Cr | ppm | 7.0 | 5.8 |
|  | Fe | ppm | 4417.8 | 2625.5 |
|  | Mg | ppm | 25674.2 | 13712.2 |
|  | Na | ppm | 9.1 | 8.0 |
|  | Ni | ppm | 239.8 | 209.2 |
|  | Si | ppm | 20.3 | 29.9 |
| * semi-quantitative: the SOs value is not fully quantitative |  |  |  |  |

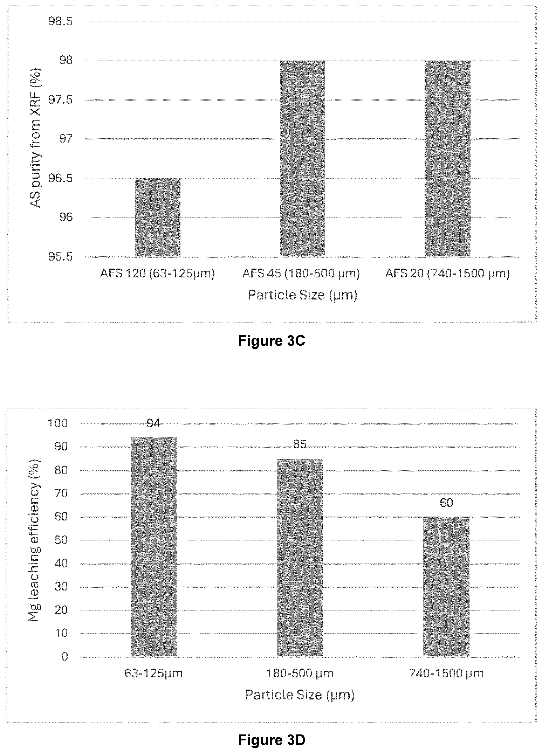

XRF is performed directly on AS obtained after grounding and drying in the oven at 125°C and still holds moisture. **LOI in XRF data represents the loss of moisture (4-7%) at 950°C, which is confirmed by TGA-MS. Moisture (4-7%) from LOI of XRF data is added to $SiO_2$ to estimate the actual amount of $SiO_2$ in the sample and reported an average of reputed experiments in Figure 3C as AS purity%.

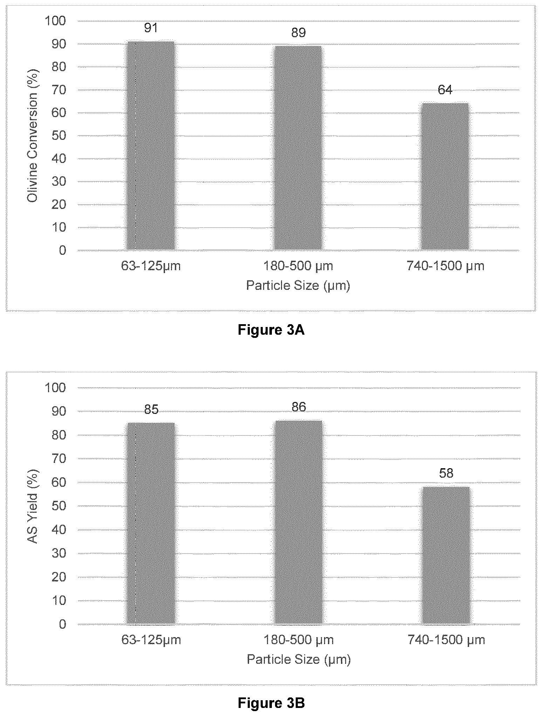

Figure 3A shows the olivine conversion for reactions using olivine with different particle size ranges. Figure 3B shows the AS yield for reactions using olivine with different particle size ranges. The figures demonstrate that reducing particle size increases both olivine conversion and AS yield. Particles with a smaller size have a greater surface area relative to their size.

Figure 3C shows the AS purity measured for products of reactions using olivine with different particle size ranges, as calculated using XRF data. The figure demonstrates that the purity of the silica obtained from processing the olivine was very high (from 96.5% to 98%) where the particle size range for olivine was AFS 120 (ca. 63 - 125 $\mu$m) and AFS 45 (ca.180 - 500 $\mu$m).

Figure 3D shows the magnesium leaching efficiency from reaction filtrates from olivine dissolution reactions using olivine with different particle size ranges, as calculated using ICP-OES data. The concentrations of metal ions ICP-OES data in Table 8 shown in ppm have different dilution factors. The final concentrations after considering dilution are in Figure 3D. In contrast to the conversion and AS yield of

Figures 3A and 3B, there is a notable increase magnesium leaching when the particle size range is decreased from AFS 45 180 - 500 $\mu$m (94%) to AFS 120 - 125 $\mu$m (85%).

*Influence of solid-to-liquid ratio on olivine digestion*

Olivine samples were processed according to method 1. The reaction parameters kept constant were as follows:

Reflux time, $t_1$ (hours): 3
Particle size range, $p_1$ ($\mu$m): AFS 45 (180 - 500 $\mu$m)
Acid concentration, $c_1$ (vol. %): 22
Temperature, $T_1$ (°C): 100

The solid(g)-to-liquid(ml) ratio was varied from 1:12 to 1:6. The four silica products that were obtained were weighed, and samples of each sent for XRF analysis. A sample of each filtrate from step (1) of method 1 was sent for ICP-OES analysis, to determine the concentration of metal ions (in particular, Mg ions) in solution.

*Table 9: XRF and ICP-OES data from the Influence of solid-to-liquid ratio on olivine digestion studies.*

| | | Description Lims no. | R-S-22%-3T-05 (18) | R-S-22%-3T-02 (5) | R-S-22%-3T-06 (20) | R-S-22%-3T-07 (22) |
|---|---|---|---|---|---|---|
| **Chemistry XRF** | $Fe_2O_3$ | % | 0.07 | 0.09 | 0.06 | 0.05 |
| | $Al_2O_3$ | % | < 0.01 | 0.02 | 0.04 | < 0.01 |
| | $TiO_2$ | % | < 0.01 | <0.01 | < 0.01 | < 0.01 |
| | $K_2O$ | % | < 0.01 | 0.01 | 0.01 | < 0.01 |
| | CaO | % | 0.02 | 0.02 | 0.01 | 0.01 |
| | MgO | % | 0.45 | 0.52 | 0.36 | 0.28 |
| | $Na_2O$ | % | 0.01 | 0.03 | 0.01 | 0.01 |
| | $SiO_2$ | % | 92.39 | 91.64 | 91.95 | 92.30 |
| | NiO | % | 0.01 | | 0.01 | 0.01 |
| | $SO_3$* | % | 0.04 | | 0.04 | 0.04 |
| **LOI** | 950°C | % | 5.80 | 6.22 | 5.88 | 6.35 |
| | | | | | | |
| **ICP-OES** | Al | ppm | 46.9 | 73.8 | 121.6 | 180.0 |
| | Cr | ppm | 8.1 | 5.8 | 10.0 | 12.2 |
| | Fe | ppm | 4037.7 | 2625.5 | 6100.8 | 8381.7 |
| | Mg | ppm | 24961.3 | 13712.2 | 35599.7 | 49072.2 |
| | Na | ppm | 9.3 | 8.0 | 11.5 | 15.1 |
| | Ni | ppm | 233.9 | 209.2 | 449.2 | 606.7 |
| | Si | ppm | 18.9 | 29.9 | 11.9 | 25.8 |
| * semi-quantitative: the SOs value is not fully quantitative | | | | | | |

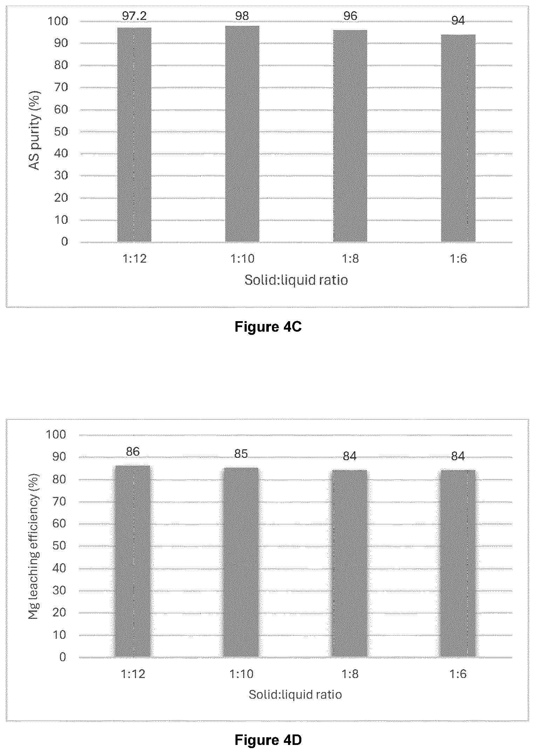

XRF is performed directly on AS obtained after grounding and drying in the oven at 125°C and still holds moisture. **LOI in XRF data represents the loss of moisture (4-7%) at 950°C, which is confirmed by TGA-MS. Moisture (4-7%) from LOI of XRF data is added to SiO2 to estimate the actual amount of $SiO_2$ in the sample and reported an average of reputed experiments in Figure 4C as AS purity%.

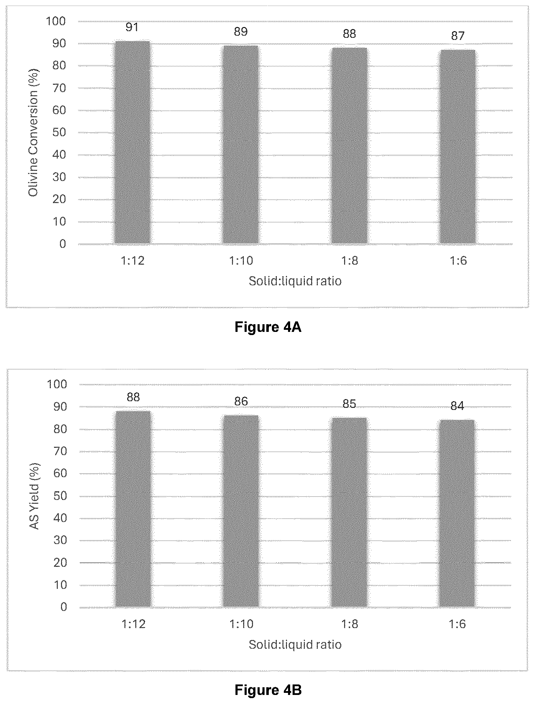

Figure 4A shows the olivine conversion for olivine reactions with various solid to liquid ratios. Figure 4B shows the AS yield for olivine reactions with various solid to liquid ratios. Figure 4C shows the AS purity measured for products of reactions olivine reactions with various solid to liquid ratios, as calculated using XRF data.

Figure 4D shows the magnesium leaching efficiency from reaction filtrates left over from olivine dissolution reactions with various solid to liquid ratios, as calculated using ICP-OES data. The concentrations of metal ions ICP-OES data in Table 9 shown in ppm have different dilution factors. The final concentrations after considering dilution are in Figure 4D.

Figures 4A-4D demonstrate that the conversion, yield, AS purity and magnesium leaching efficiency are all similar regardless of the ratio of solid to liquid for the olivine reaction.

Example 2: a large-scale method for forming amorphous silica and metal salts from olivine

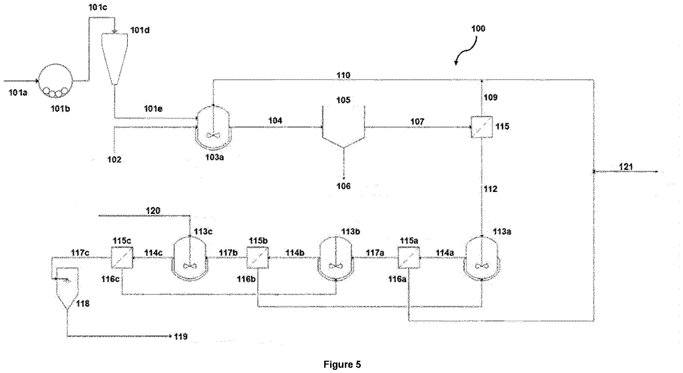

Figure 5 illustrates a schematic diagram of large-scale olivine dissolution system 100.

Olivine of particle size from 0 to 3mm dried at 150°C 101a is entered into a ball mill 101b. Grounded olivine 101c entered the cyclone system 101d to separate fine material to obtain selected olivine particles. Olivine particles ($60\mu m<d>400\mu m$) 101e entered reactor 103a. Sulphuric acid 102 entered system 100 and were introduced to reactor 103a. Leached solution portion 110 (containing sulphuric acid) was also introduced to reactor 103a. The reactor 103a used here was a batch-type reactor. However, the reactor 103a can optionally be of the continuous reactor type, for example a stirred-in-tank series.

In reactor 103a, olivine 101, sulphuric acid 102 and leached solution portion 110 were mixed and agitated with a stirrer at from 100 to 500 revolutions per minute. The reaction mixture was heated to from 50 °C to 130 °C. The reaction began at atmospheric pressure and proceeded at an autogenous pressure. The pH was maintained from -1 to 0. The olivine 101 and sulphuric acid 102 reacted to form slurry 104 including amorphous silica. As the reaction was exothermic, reactor 103a optionally had a heating or cooling coil or a jacketed reactor in order to cool the reaction mixture during the reaction.

The reactor 103a was operated in parallel with a second reactor 103b (not shown). Olivine 101e, sulphuric acid 102 and leached solution 110 were introduced into second reactor 103b which was operated in the same way as dissolution reactor 103a.

After from 0.5h to 10h of reaction time, the slurry 104 entered sedimentation tank 105. The slurry 104 was allowed to settle for from 1 to 10 minutes forming sediment 106 and refined slurry 107. The sediment, comprising unreacted minerals and inert minerals, was removed and discarded after washing/neutralisation.

The sedimentation step using a sedimentation tank above may instead or additionally occur after the washing of the solids in washing tanks 113a, 113b, or 113c (see below).

Refined slurry 107 then entered leach filter 115. In this example, reaction filter 115 was a filter press. In filter 115, the slurry was forced against a filter material so as to separate the leached solution 109 from the solids 112. The leached solution 109 comprised dilute sulphuric acid and dissolved metal sulphates, such as magnesium sulphate, iron (II) sulphate, iron (III) sulphate and nickel sulphate. The solids 112 included amorphous silica.

The leached solution 109, containing sulphuric acid, was highly acidic. Therefore, a portion 110 of the leached solution 109 was fed back to reactor 103a (and/or reactor 103b) to react with olivine 101.

The solids 112 optionally entered first washing tank 113a. In this example, the first washing tank 113a was a stirred tank. The first washing tank may instead be another type of washing tank, such as a sonicated tank. In this example, water from second wash stream 116b was introduced to the first washing tank 113a in a counter-current configuration. The water may alternatively be fresh water 120. The solids 112 were dispersed with the water for from 0 to 120 minutes, forming a first silica wash mixture 114a.

First silica wash mixture 114a entered first silica filter 115a. Filter 115a was a filter press equipped with cold and hot water to backwash the silica cake, and compressed air connection to dewater the silica cake. The filter solids 117a comprising amorphous silica were collected and optionally transferred to second washing tank 113b. The filter solids 117a may instead be directly dried in drier 118 (as described later) or collected without drying. The filter liquids 116a exited the filter 115a and were either sent to waste 121 or (fully or partially) introduced into portion 110 of the leached solution 109.

In this example, the second washing tank 113b was a stirred tank. The second washing tank 113b may instead be another type of washing tank, such as a sonicated tank. In this example, water from third wash stream 116c was introduced to the second washing tank 113b in a counter-current configuration. The water may alternatively be fresh water 120. The solids 117a were mixed with the water for from 0 to 120 minutes, forming a second silica wash mixture 114b.

Second silica wash mixture 114b entered second silica filter 115b. Filter 115b was a filter press equipped with cold and hot water to backwash the silica cake, and compressed air connection to dewater the silica cake. The filter solids 117b comprising amorphous silica were collected and optionally transferred to third washing tank 113c. The filter solids 117b may instead be directly dried in drier 118 (as described later) or collected without drying. The filter liquids 116b were introduced to the first washing tank 113a.

In this example, the third washing tank 113c was a stirred tank. The third washing tank 113c may instead be another type of washing tank, such as a sonicated tank. In this example, fresh water was introduced to the second washing tank 113c in a counter-current configuration. The filter solids 117b were mixed with the water for from 0 to 120 minutes, forming a third silica wash mixture 114c.

Third silica wash mixture 114c entered third silica filter 115c. Filter 115c was a filter press equipped with cold and hot water to backwash the silica cake, and compressed air connection to dewater the silica cake. The filter solids 117c comprising amorphous silica were collected. The filter liquids 116c were introduced to the second washing tank 113b.

The filter solids 117c were diluted with water, such that the moisture content and viscosity are suitable for tray drying or spray drying. The cake with low moisture content or diluted solids were introduced to a tray drier or spray-drier 118. The material is dried at a temperature of from 105°C to 200°C. The drying formed powdered amorphous silica 119.

Olivine is digested using lab scale method one (referred to as silica lab 1-3 in Table 10; this is the same method as described as "Example 1: Lab-scale olivine dissolution" earlier in this specification) and large scale method (referred to as silica pilot plant 1-3 in Table 11; this is the same method as described as "Example 2: a large-scale method for forming amorphous silica and metal salts from olivine" earlier in this specification) by using the following parameters to produce amorphous silica and XRF was carried out after drying the sample at 1200°C to remove moisture.

Acid concentration, $c_1$ (vol. %): 22
Particle size range, $p_1$ ($\mu$m): AFS 45 (180 - 500$\mu$m)
Temperature, $T_1$ (°C): 100
Solid:liquid: 1:12

*Table 10:* Chemical composition of lab scale from XRF.

| | Chemical composition after LOI 1200 °C: XRF | | |
|---|---|---|---|
| Oxide | PR-021290-001 | PR-021290-002 | PR-021290-003 |
| | Silica lab 1 | Silica lab 2 | Silica lab 3 |
| Sum (%) | 99.674 | 99.505 | 99.703 |
| $Fe_2O_3$ (%) | 0.102 | 0.113 | 0.109 |
| $Al_2O_3$ (%) | 0.084 | 0.080 | 0.080 |
| $TiO_2$ (%) | < 0.002 | < 0.002 | < 0.002 |
| $K_2O$ (%) | 0.006 | 0.005 | 0.006 |
| CaO (%) | 0.031 | 0.024 | 0.022 |
| MgO (%) | 0.786 | 0.867 | 0.849 |
| $Na_2O$ (%) | 0.023 | 0.014 | 0.011 |
| $SiO_2$ (%) | 98.553 | 98.312 | 98.541 |
| BaO (%) | < 0.003 | < 0.003 | < 0.003 |
| SrO (%) | < 0.001 | < 0.001 | < 0.001 |
| $ZrO_2$ (%) | < 0.001 | < 0.001 | < 0.001 |
| $Cr_2O_3$ (%) | 0.049 | 0.052 | 0.053 |
| $Mn_2O_3$ (%) | 0.002 | 0.003 | 0.002 |
| *$SO_3$ (%) | 0.017 | 0.019 | 0.012 |
| *NiO (%) | 0.013 | 0.011 | 0.013 |
| * results are semi-quantitative. | | | |

*Table 11:* Chemical composition of large scale from XRF.

| | | Chemical composition after LOI 1200 °C: XRF | | |
|---|---|---|---|---|
| Method | Oxide | PR-021290-004 | PR-021290-005 | PR-021290-006 |
| | | Silica pilot plant 1 | Silica pilot plant 2 | Silica pilot plant 3 |
| | Sum (%) | 99.743 | 99.510 | 99.616 |
| | $Fe_2O_3$ (%) | 0.175 | 0.159 | 0.176 |
| | $Al_2O_3$ (%) | 0.163 | 0.142 | 0.164 |

(continued)

| Chemical composition after LOI 1200 °C: XRF | | | | |
|---|---|---|---|---|
| Method | Oxide | PR-021290-004 | PR-021290-005 | PR-021290-006 |
| | | Silica pilot plant 1 | Silica pilot plant 2 | Silica pilot plant 3 |
| | $TiO_2$ (%) | < 0.002 | < 0.002 | < 0.002 |
| | $K_2O$ (%) | 0.005 | 0.006 | 0.005 |
| | CaO (%) | 0.121 | 0.106 | 0.115 |
| | MgO (%) | 1.266 | 1.152 | 1.287 |
| | $Na_2O$ (%) | 0.030 | 0.022 | 0.019 |
| | $SiO_2$ (%) | 97.882 | 97.830 | 97.741 |
| | BaO (%) | < 0.003 | < 0.003 | < 0.003 |
| | SrO (%) | < 0.001 | < 0.001 | < 0.001 |
| | $ZrO_2$ (%) | < 0.001 | < 0.001 | < 0.001 |
| | $Cr_2O_3$ (%) | 0.070 | 0.061 | 0.072 |
| | $Mn_2O_3$ (%) | 0.004 | 0.003 | 0.004 |
| | *$SO_3$ (%) | < 0.005 | 0.006 | 0.008 |
| | *NiO (%) | 0.017 | 0.017 | 0.018 |
| * results are semi-quantitative. | | | | |

The silica produced by the method of the present invention, and characterised in Tables 10 and 11, is high purity and produced with a lower carbon footprint compared to conventional methods.

*Microscopy of AS sample*

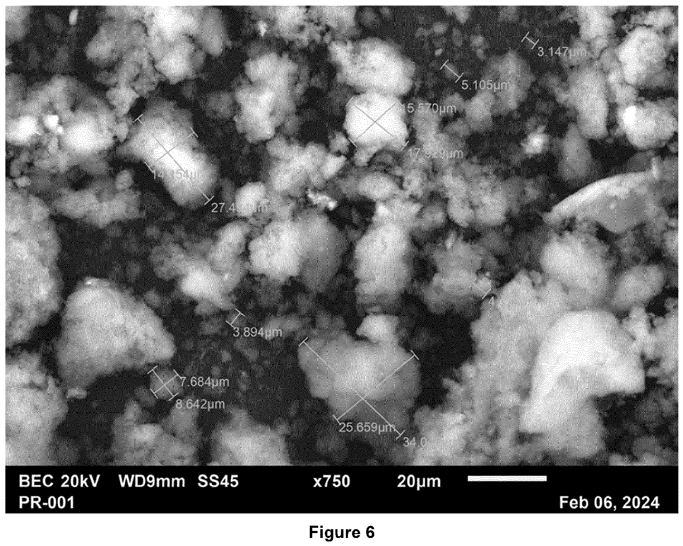

A silica product obtained from sample Silica pilot plant 3 shown in Table 10 (dried at 125°C in a lab oven and before LOI at high temperature) was imaged using an SEM. Figure 6 shows that the AS particles produced are generally spherical.

*Particle Size Distribution of AS sample*

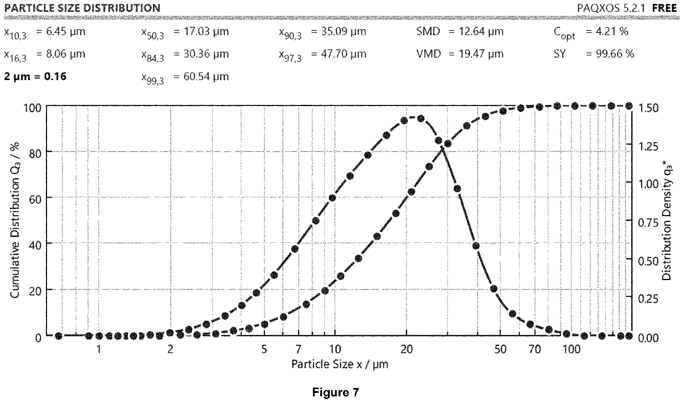

A silica product obtained from sample Silica pilot plant 3 shown in Table 10 (dried at 125°C in a lab oven and before LOI at high temperature) was analysed for particle size distribution and shown in Figure 7. The D50 of the particles of amorphous silica is 17 $\mu$m. The D10 of the particles of amorphous silica is 6 $\mu$m. The D90 of the particles of amorphous silica is 35 $\mu$m.

*TGA-MS of AS sample*

A silica product obtained from sample Silica pilot plant 3 shown in table 10 (dried at 125°C in a lab oven and before LOI at high temperature) was analysed with TGA-MS.
From the TGA analysis a release of water can be noted from a temperature of 27.9°C until about 150°C (Figure 8A). In the coupled MS analysis the mass peak of 18 corresponds to the water (Figure 8B). Increase of the temperature does not give any further significant mass releases and also in the MS analysis no further species could be noticed.

*Surface area of AS sample*

A silica product obtained from sample Silica pilot plant 3 shown in table 10) (dried at 125°C in a lab oven and before LOI at high temperature) was analysed with BET. Prior to BET analysis, the AS sample was outgassed to remove impurities and moisture under the nitrogen gas atmosphere. After that outgassing the sample, the surface area of AS was analysed by increasing the nitrogen gas pressure, while measuring the amount adsorbed on the surface of the sample. The analysis shows the surface area of AS sample is 250m$^2$/g (as measured by Nova Touch 4LX provided by Quantachrome Instruments).

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilized for realizing the invention in diverse forms thereof.

Although certain example aspects of the invention have been described, the scope of the appended claims is not intended to be limited solely to these examples. The claims are to be construed literally, purposively, and/or to encompass equivalents.

**Claims**

1. Amorphous silica comprising particles of amorphous silica, wherein the particles of amorphous silica have a D50 of from 5 $\mu$m to 30 $\mu$m.

2. The amorphous silica of claim 1, wherein the amorphous silica has: a silica purity of: 85% by weight or greater; or, 90% by weight or greater; or, 94% by weight or greater.

3. The amorphous silica of claim 1 or claim 2, wherein the amorphous silica has a silica purity of: from 94% to 99.9% by weight; or, from 97% to 99.9% by weight; or, from 97% to 99% by weight.

4. The amorphous silica of any one of claims 1 to 3, wherein the phase purity of the amorphous silica comprises 85% by weight or greater amorphous silica, any remainder of silica being silica with crystalline morphology; optionally, wherein the phase purity of the amorphous silica comprises:

   from 85% to 99.9%; or,
   from 90% to 99%; or,
   from 95% to 99%; or,
   from 97% to 99%;
   by weight amorphous silica, any remainder of silica being silica with crystalline morphology.

5. The amorphous silica of any one of claims 1 to 4, wherein:

   the particles of amorphous silica have a D10 of from 0.5 $\mu$m to 15 $\mu$m; and/or,
   the particles of amorphous silica have a D90 of from 10 $\mu$m to 70 $\mu$m.

6. The amorphous silica of any one of claims 1 to 5, wherein the amorphous silica comprises:

   less than 2,000 ppm Mg as measured by ICP-OES; or less than 1,000 ppm Mg as measured by ICP-OES; and/or,
   less than 300 ppm Ni as measured by ICP-OES; or, less than 250 ppm Ni as measured by ICP-OES.

7. The amorphous silica of any one of claims 1 to 6, wherein:

   the amorphous silica: has a BET of: from 50m$^2$/g to 500m$^2$/g; or, from 100m$^2$/g to 400m$^2$/g; or, from 150m$^2$/g to 350m$^2$/g; or, from 200m$^2$/g to 300m$^2$/g; and/or,
   the particles of amorphous silica are generally spherical; and/or,
   the amorphous silica is precipitated amorphous silica.

8. A slurry comprising amorphous silica according to any one of claims 1 to 7; optionally, wherein the slurry further comprises water and acid; optionally, wherein the acid is sulfuric acid.

9. A cake or a powder, the cake or the powder comprising amorphous silica according to any one of claims 1 to 7.

10. The slurry according to claim 8, or the cake or the powder according to claim 9, for use in forming precipitated amorphous silica.

11. A method of producing amorphous silica, the method comprising:

mixing olivine, water and acid in a first vessel; and,
reacting the olivine with the acid to produce amorphous silica.

12. The method of claim 11, wherein the method further produces metal salts; optionally, wherein the metal salts comprise (or consist of) any one or more of: $MgSO_4$, $FeSO_4$ and/or $NiSO_4$.

13. The method of producing amorphous silica of claim 11 or claim 12, wherein:

the acid is selected from an organic acid and/or an inorganic acid; and/or,
the acid is selected from one or more of: sulphuric acid ($H_2SO_4$), ammonium acid sulfite (($NH_4)_2SO_3$) and hydrochloric acid (HCl); optionally, wherein the acid is sulphuric acid ($H_2SO_4$); and/or,
wherein the olivine comprises, or consists of, olivine particles; optionally, wherein the particle size of the olivine particles is: from 5 μm to less than 1500 μm; or, from 5 μm to less than 500 μm; or, from 5 μm to less than 300 μm; or, from 5 μm to less than 200 μm; or, from 5 μm to less than 100 μm; and/or,
the method comprising reacting the olivine with the acid for: from 0.5 hours to 10 hours; or, from 1 hour to 8 hours; or, from 2 hours to 6 hours; or, reacting the olivine with the acid for from 3 hours to 4 hours; optionally, wherein the olivine is reacted with the acid in a batch reactor or a continuous reactor.

14. The method of producing amorphous silica of any one of claims 11 to 13, wherein:

the reaction between the olivine and the sulfuric acid is maintained at a temperature of from 30°C to 180°C; or, the reaction between the olivine and the sulfuric acid is maintained at a temperature of from 40°C to 150°C; or, the reaction between the olivine and the sulfuric acid is maintained at a temperature of from 50 °C to 120 °C; and/or,
wherein the acid concentration is: from 10 volume % to 35 volume %; or from 15 volume % to 30 volume %; or from 20 volume % to 25 volume %; and/or,
wherein the reaction between the olivine and the sulfuric acid ($H_2SO_4$) is maintained at a pH of from -2 to 5; or, wherein the reaction between the olivine and the acid is maintained at a pH of from -1 to 4; or, wherein the reaction between the olivine and the acid is maintained at a pH of from 0 to 3.

15. The method of producing amorphous silica of any one of claims 11 to 14, wherein:

the reaction between the olivine and the acid (optionally, $H_2SO_4$) starts at atmospheric pressure and proceeds at autogenous pressure; and/or,
further comprising subsequently cooling the reaction mixture to: between 20°C and 80°C; or, between 20°C and 50°C; and/or,
further comprising the step of allowing the reaction mixture to settle, forming a layer of sediment and a layer of slurry; further optionally, wherein the reaction mixture is transferred to a second vessel before being allowed to settle; optionally, wherein the reaction mixture is allowed to settle for between 10 minutes and 1 hour; and/or,
further comprising filtering the layer of slurry to form a filter cake; optionally, wherein the filtering occurs on a filter press; optionally, a plate-and-frame filter press, a rotary drum filter a centrifugal separator or a membrane-based filter; and/or,
further comprising feeding the filtrate back to the first vessel; and/or,
further comprising washing the filter cake with water, forming a clean filter cake and used washing water; optionally, wherein the water used to wash the filter cake comprises used washing water; and/or,
further comprising drying the clean filter cake; optionally, spray drying the clean filter cake.

16. The method of any one of claims 11 to 15, wherein the produced amorphous silica is according to any one of claims 1 to 10.

17. Amorphous silica obtained, or obtainable, by the method of any one of claims 11 to 15.

18. A metal sulphate obtained, or obtainable, by the method of any one of claims 11 to 15; optionally, wherein the metal sulphate comprises one or more of: magnesium sulphate ($MgSO_4$), iron(II) sulphate ($FeSO_4$), and/or nickel sulphate ($NiSO_4$).

19. Amorphous silica according to any one of claims 1 to 7, a slurry according to claim 8, a cake or a powder according to claim 9, for use in reinforcing, thickening and/or flattening products in the rubber, coatings, cosmetics and/or food

industries.

Figure 1A

Figure 1B

**Figure 1C**

**Figure 1D**

Figure 2A

Figure 2B

**Figure 2C**

**Figure 2D**

**Figure 3A**

**Figure 3B**

Figure 3C

Figure 3D

Figure 4A

Figure 4B

**Figure 4C**

**Figure 4D**

Figure 5

Figure 6

PARTICLE SIZE DISTRIBUTION                                                    PAQXOS 5.2.1 **FREE**

$x_{10,3}$ = 6.45 µm          $x_{50,3}$ = 17.03 µm          $x_{90,3}$ = 35.09 µm          SMD = 12.64 µm          $C_{opt}$ = 4.21 %

$x_{16,3}$ = 8.06 µm          $x_{84,3}$ = 30.36 µm          $x_{97,3}$ = 47.70 µm          VMD = 19.47 µm          SY = 99.66 %

**2 µm = 0.16**          $x_{99,3}$ = 60.54 µm

Figure 7

Figure 8A

Figure 8B

| | Europäisches Patentamt European Patent Office Office européen des brevets | **EUROPEAN SEARCH REPORT** | **Application Number** EP 24 16 5180 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LAZARO A. ET AL: "The influence of process conditions and Ostwald ripening on the specific surface area of olivine nano-silica", MICROPOROUS AND MESOPOROUS MATERIALS, vol. 181, 1 November 2013 (2013-11-01), pages 254-261, XP093202720, Amsterdam ,NL ISSN: 1387-1811, DOI: 10.1016/j.micromeso.2013.08.006 Retrieved from the Internet: URL:https://www.sciencedirect.com/science/article/pii/S138718111300382X/pdfft?md5=1b3122a5d821984c43e999771e685026&pid=1-s2.0-S138718111300382X-main.pdf> * abstract * * table 7 * * from p. 260, left column, last para. to p. 260, right column, first para. * * section 1.1. Olivine nano-silica process on p. 254 and first para. of p. 255 * * table 8 * * the whole document * ----- | 1-10, 16-18 | INV. C01B33/187 C01B33/193 C08K3/36 C01B17/96 C01F5/40 C01G53/10 C01G49/14 C01B33/18 |
| X | AU 612 632 B2 (UNILEVER PLC) 18 July 1991 (1991-07-18) * claim 5 * ----- -/-- | 1 | TECHNICAL FIELDS SEARCHED (IPC) C01B C01F C01G C08K |

The present search report has been drawn up for all claims

| Place of search | Date of completion of the search | Examiner |
|---|---|---|
| The Hague | 30 September 2024 | Eren, Hamit |

EPO FORM 1503 03.82 (P04C01)

page 1 of 2

Europäisches
Patentamt

European
Patent Office

Office européen
des brevets

## EUROPEAN SEARCH REPORT

Application Number

EP 24 16 5180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/065185 A1 (CAPRIGEMINI B V [NL]) 7 May 2015 (2015-05-07) <br> * table 2 * <br> * p. 7, para. 3; claim 1 * <br> * p. 1, para. 2 * <br> * claim 14 * <br> * claim 11 * <br> * page 14 * <br> * example 1 * <br> * claim 10 * <br> * examples 1-4 * <br> * the whole document * | 1,11-16, 19 | |
| X | EP 2 043 953 B1 (NORUT TEKNOLOGI AS [NO]) 9 October 2013 (2013-10-09) <br> * para. 6 and claim 1 * | 11-16 | |
| X | EA 010 899 B1 (COD TECHNOLOGIES A S [NO]) 30 December 2008 (2008-12-30) <br> * claim 1 * | 11-16 | |
| X | US 8 110 166 B2 (GUNNARSSON GUDMUNDUR [IS]; SILMAG DA [NO]) 7 February 2012 (2012-02-07) <br> * claim 1 * | 11-16 | TECHNICAL FIELDS SEARCHED (IPC) |

The present search report has been drawn up for all claims

| Place of search | Date of completion of the search | Examiner |
|---|---|---|
| The Hague | 30 September 2024 | Eren, Hamit |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 5180

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2024

| Patent document cited in search report | | Publication date | Patent family member(s) | | Publication date |
|---|---|---|---|---|---|
| AU 612632 | B2 | 18-07-1991 | AT | E84282 T1 | 15-01-1993 |
| | | | AU | 612632 B2 | 18-07-1991 |
| | | | CA | 1305694 C | 28-07-1992 |
| | | | DE | 3877243 T2 | 03-06-1993 |
| | | | DK | 173788 A | 01-10-1988 |
| | | | EP | 0287232 A1 | 19-10-1988 |
| | | | ES | 2037215 T3 | 16-06-1993 |
| | | | JP | H0569045 B2 | 30-09-1993 |
| | | | JP | S63252915 A | 20-10-1988 |
| | | | US | 5643624 A | 01-07-1997 |
| | | | ZA | 882285 B | 27-12-1989 |
| WO 2015065185 | A1 | 07-05-2015 | NONE | | |
| EP 2043953 | B1 | 09-10-2013 | DK | 178662 B1 | 24-10-2016 |
| | | | EP | 2043953 A1 | 08-04-2009 |
| | | | NO | 329711 B1 | 06-12-2010 |
| | | | WO | 2008004888 A1 | 10-01-2008 |
| EA 010899 | B1 | 30-12-2008 | AU | 2005205679 A1 | 28-07-2005 |
| | | | CA | 2551679 A1 | 28-07-2005 |
| | | | CN | 1956923 A | 02-05-2007 |
| | | | EA | 200601307 A1 | 29-12-2006 |
| | | | EG | 24330 A | 27-01-2009 |
| | | | EP | 1704119 A1 | 27-09-2006 |
| | | | US | 2009263657 A1 | 22-10-2009 |
| | | | WO | 2005068363 A1 | 28-07-2005 |
| US 8110166 | B2 | 07-02-2012 | AT | E496868 T1 | 15-02-2011 |
| | | | AU | 2003302410 A1 | 18-06-2004 |
| | | | CA | 2507016 A1 | 10-06-2004 |
| | | | CN | 1717367 A | 04-01-2006 |
| | | | EP | 1572588 A2 | 14-09-2005 |
| | | | ES | 2360358 T3 | 03-06-2011 |
| | | | IS | 6635 A | 28-05-2004 |
| | | | JP | 4537857 B2 | 08-09-2010 |
| | | | JP | 2006508010 A | 09-03-2006 |
| | | | KR | 20050091710 A | 15-09-2005 |
| | | | RU | 2338687 C2 | 20-11-2008 |
| | | | US | 2006051279 A1 | 09-03-2006 |
| | | | WO | 2004048264 A2 | 10-06-2004 |

EPO FORM P0459

For more details about this annex : see Official Journal of the European Patent Office, No. 12/82